# EUROPÄISCHE PATENTSCHRIFT

(11) **EP 1 736 369 B1**
(45) Veröffentlichungstag und Bekanntmachung des Hinweises auf die Patenterteilung: **16.01.2013**
(21) Anmeldenummer: 06012509.3
(22) Anmeldetag: 19.06.2006
(51) Int. Cl.: B60R 19/18

(54) **Stossfänger für ein Kraftfahrzeug**
Bumper for motor vehicle
Pare-chocs de véhicule automobile

(30) Priorität: 24.06.2005 DE 102005029770
(43) Veröffentlichungstag der Anmeldung: 27.12.2006
(73) Patentinhaber: Benteler Automobiltechnik GmbH, 33102 Paderborn (DE)
(72) Erfinder: Roll, Michael, 33615 Bielefeld (DE); Lütke-Bexten, Ulrich, 33102 Paderborn (DE); Arns, Wilhelm Dr., 33102 Paderborn (DE); Mollemeier, Elmar, 33100 Paderborn (DE)
(74) Vertreter: Ksoll, Peter

(56) Entgegenhaltungen:
- EP-A- 1 207 085
- EP-A- 1 477 371
- WO-A-02/30714
- DE-A1- 10 135 903
- DE-A1-102006 002 871
- JP-A- 2005 263 113
- US-A- 4 386 799

## Beschreibung

Die Erfindung betrifft einen Stoßfänger für ein Kraftfahrzeug gemäß den Merkmalen im Oberbegriff von Anspruch 1.

Stoßfänger sind quer an Front und Heck eines Kraftfahrzeugs zwischen der die Karosserie abschließenden Kunststoffverschalung und dem Rahmen des Kraftfahrzeugs angeordnet. Sie sollen dazu beitragen, dass die Fahrzeugstruktur bei einem Anprall mit geringer Geschwindigkeit keine Beschädigung davonträgt. Hierzu sind zwischen dem Querträger und die Längsträger Crashboxen geschaltet. Die Crashboxen sollen die aus einem Anprall resultierende Energie absorbieren, indem diese in Verformungsarbeit umgewandelt wird.

Unterschiedlichste Stoßfänger bzw. Stoßfängeranordnungen sind bekannt. So zählt durch die DE 42 38 631 A1 eine Stoßfängeranordnung zum Stand der Technik mit einem Pralldämpfer aus einem Innenrohr und einem Außenrohr, die im Kollisionsfall ineinander geschoben werden. Das Innenrohr ist an den Schenkeln des Querträgers befestigt. Nachteilig an dieser Ausführungsform sind deren Gewicht und der aufwendige konstruktive Aufbau.

Eine in der Praxis bewährte Crashbox gemäß der EP 1 207 085 B1 besteht aus einer im Querschnitt rechteckigen Konstruktion, gebildet aus einer Oberschale und einer Unterschale. Diese sind U-förmig profiliert und ineinander gefügt. Die Bauart zeichnet sich durch eine hohe Quersteifigkeit aus. Das querträgerseitige Ende der Crashbox ist sowohl innen am Steg des Querträgers als auch im Bereich der Enden der Schenkel gefügt.

Auch die US-A-5,785,367 zeigt einen Stoßfänger mit einem unter Eingliederung von gehäuseartigen Crashboxen quer zu den Längsträgern des Kraftfahrzeugrahmens festlegbaren, im Querschnitt U-förmigen Querträger, wobei Querträger und Crashboxen z.B. durch Schweißen gefügt sind.

Eine über den gesamten Umfang des querträgerseitigen Endes der Crashbox verlaufende Verschweißung ist jedoch herstellungstechnisch aufwendig und auch wegen der nur begrenzten Zugänglichkeit des im Querträger anliegenden Endes kaum möglich. Aus diesem Grund wird in der Praxis der obere und untere Horizontalschenkel der Crashbox am querträgerseitigen Ende nicht mit dem Querträger verschweißt. Dies hat jedoch nachteilige Auswirkungen auf das Deformationsverhalten des Stoßfängers bzw. der Crashbox. Insbesondere hat sich gezeigt, dass das Verhalten der Crashbox im Auflagebereich der nicht verschweißten oberen und unteren Horizontalschenkel der Crashbox auf dem Querträger nicht klar definiert ist. Somit sind das Faltverhalten der Crashbox und das Stoßabsorptionsvermögen des Stoßfängers im Falle eines Anpralls nicht zuverlässig vorhersehbar.

Auch die DE 10 2006 002 871 A1 beschreibt eine Stoßfängeranordnung, welche Öffnungen in der zumindest einen Wandung des Querträgerprofilelements aufweist. Diese Öffnungen sind dafür vorgesehen, Energieaufnahmeeinrichtungen aufzunehmen und mit dem Querträger zu fügen. Auch hier wird die Energieaufnahmeeinrichtung mit dem Querträger beispielsweise durch Lochschweißen verbunden.

Bei der DE 102 06 011 A1 ebenso wie bei der DE 101 35 903 A1 weist der Querträger im Anbindungsbereich zu den Crashboxen Einbauchungen auf, die in die offenen Enden der Crashboxen eingreifen. Hierdurch soll eine Querstabilisierung des Querträgers erfolgen

Darüber hinaus zeigt die WO 02/30714 A1 einen U-förmig gestalteten Querträger auf, welcher in seiner Längsrichtung eine in Richtung der Crashboxen ausgestellte Einbauchung aufweist.

Der Erfindung liegt ausgehend vom Stand der Technik die Aufgabe zugrunde, einen Stoßfänger zu schaffen mit einem für die Praxis verbesserten, kontrollierten Nachgiebigkeitsverhalten.

Die Lösung dieser Aufgabe besteht nach der Erfindung in einem Stoßfänger gemäß den Merkmalen von Anspruch 1.

Kernpunkt der Erfindung bildet die Maßnahme, dass der Steg des Querträgers im Bereich der querträgerseitigen Enden einer Crashbox zumindest eine in Richtung zur Crashbox ausgestellte, in das offene Ende hinein ragende Vertiefung aufweist, wobei jede Crashbox am querträgerseitigen Ende mit ihren Vertikalschenkeln an den Steg des Querträgers gefügt ist, wohingegen die Horizontalschenkel der Crashboxen zum Steg einen Abstand aufweisen. Hierdurch ist eine stabile Fixierung der Vertikalschenkel am Querträger gewährleistet. Die nicht verschweißten, mit Abstand zum Steg des Querträgers angeordneten Horizontalschenkel der Crashboxen werden durch die erfindungsgemäß vorgesehene Vertiefung im Bewegungsverhalten in Längsrichtung der Crashbox kontrolliert.

Durch die erfindungsgemäße Ausgestaltung des Querträgers mit den Vertiefungen im Anbindungsbereich der Crashbox, welche in die Enden der Crashbox hineinragen, wobei die Crashboxen jeweils nur links und rechts einer Vertiefung mit den Vertikalschenkeln an den Steg des Querträgers gefügt, die Horizontalschenkel jedoch zum Steg des Querträgers beabstandet sind, kann ein kontrolliertes und damit vorhersehbares Deformationsverhalten erreicht werden. Die Vertiefung befindet sich innerhalb der Crashbox, weist aber zu den Horizontalschenkeln einen Abstand auf. Im Deformationsfall legt sich die Vertiefung an die Crashbox an. Hierbei unterstützt der Freiraum zu den Horizontalschenkeln den kontrollierten Deformationsvorgang, insbesondere den Faltvorgang der Crashbox. Der Abstand gewährleistet, dass eine gewünschte Initialfaltung nicht behindert wird. Dies hat Vorteile für das Nachgiebigkeitsverhalten des Stoßfängers im Falle eines Anpralls und verbessert den Schutz der Fahrzeugstruktur. Von Vorteil ist dies aber auch für die Entwicklung von Stoßfängersystemen und deren Auslegung bzw. Einpassung in das Gesamtsystem Kraftfahrzeug, da eine bessere Vorhersagbarkeit des Deformationsverhaltens des Stoßfängers in der Simulation möglich ist. Insbesondere kann durch die erfindungsgemäße Ausgestaltung ein nicht definierbares Deformationsverhalten des querträgerseitigen Endes zu Beginn eines Anpralls aufgrund von nicht festlegbaren Randbedingungen, wie Stoßrichtung und Geschwindigkeit oder Reibbedingungen deutlich reduziert werden.

Vorteilhafte Ausgestaltungen des grundsätzlichen Erfindungsgedankens sind Gegenstand der abhängigen Ansprüche 2 bis 8.

Vorzugsweise ist der Abstand zwischen den Horizontalschenkeln der Crashboxen zum Steg des Querträgers zwischen 1 mm und 8 mm bemessen. Für die Praxis wird insbesondere ein Abstand von 4 mm bis 6 mm als vorteilhaft angesehen. Dieser Abstand ermöglicht einerseits eine Orientierung des Verformungsweges im Zusammenspiel von Querträger und Crashbox und stellt andererseits definierte Verhältnisse für den Faltvorgang sicher. Dies gilt insbesondere für die Initialverformung zu Beginn des Faltvorgangs.

Die Vertiefungen im Querträger, welche in Richtung zu den Crashboxen ausgestellt sind und in die querträgerseitigen Enden hineinragen, können verschiedenartig gestaltet sein. Wichtig ist, dass eine gezielte Orientierung der Freiheitsgrade der Crashbox im Falle eines Anpralls und damit ein undefiniertes Ausweichen der Horizontalschenkel vermieden wird. Hierzu können die Vertiefungen schalenartig flächig oder bauchig gestaltet sein nach Art einer Verprägung. Möglich ist auch eine rinnenartige Gestaltung der Vertiefung nach Art einer Sicke. Vorzugsweise sind hier zwei im vertikalen Abstand übereinander angeordnete Vertiefungen vorgesehen, welche sich parallel zu den Schenkeln des Querträgers erstrecken, so dass die Horizontalschenkel der Crashbox am querträgerseitigen Ende in ihrem Bewegungsverhalten gefesselt sind.

Zusätzlich zu der oder den Vertiefungen kann der Steg des Querträgers im Bereich der Stirnseite einer Crashbox eine Öffnung aufweisen. Diese dient insbesondere dazu, eine Abschleppöse in eine innerhalb der Crashbox angeordnete Ösenanbindung einzuführen.

Weiterhin vorteilhaft ist, wenn eine Crashbox sich quer zu ihrer Längsachse erstreckende Sicken und Verprägungen aufweist. Durch die Sicken und Verprägungen wird eine gezielte Deformation der Crashbox begünstigt. Auch kann durch Art, Ausbildung und Anordnung der Sicken bzw. Verprägungen das Steifigkeitsverhalten einer Crashbox beeinflusst werden.

Die Crashboxen sind gehäuseartige dünnwandige Hohlkörper aus Metallblech. Diese sind bevorzugt zweischalig aus Ober- und Unterschale gebildet. Oberschale und Unterschale sind an den Längskanten ihrer seitlichen Vertikalschenkel gefügt. Zum Querträger hin sind die Crashboxen offen. Längsträgerseitig besitzen sie in der Regel einen Anschlussflansch zur Anbindung an die Längsträger.

Die Erfindung ist nachfolgend anhand von in den Zeichnungen dargestellten Ausführungsbeispielen näher beschrieben. Es zeigen:
- Figur 1: in perspektivischer Darstellungsweise eine erste Ausführungsform eines erfindungsgemäßen Stoßfängers;
- Figur 2: einen Endabschnitt des Querträgers gemäß der Figur 1 mit Crashbox;
- Figur 3: einen schematisierten Vertikalschnitt durch eine Crashbox und den Querträger des Stoßfängers gemäß der Figur 1;
- Figur 4: ebenfalls in perspektivischer Darstellungsweise eine weitere Ausführungsform eines erfindungsgemäßen Stoßfängers;
- Figur 5: einen Endabschnitt des Querträgers gemäß der Figur 4 mit Crashbox;
- Figur 6: einen schematisierten Vertikalschnitt durch eine Crashbox und den Querträger eines Stoßfängers gemäß der Figur 4;
- Figur 7: in perspektivischer Darstellungsweise eine Crashbox in einer Ansicht schräg von hinten;
- Figur 8: die Crashbox gemäß der Figur 7 in einer Ansicht von der anderen Seite;
- Figur 9: wiederum in perspektivischer Darstellungsweise eine Schnittdarstellung der Crashbox gemäß der Figur 7 und
- Figur 10: eine weitere Schnittdarstellung der Crashbox gemäß Figur 7.

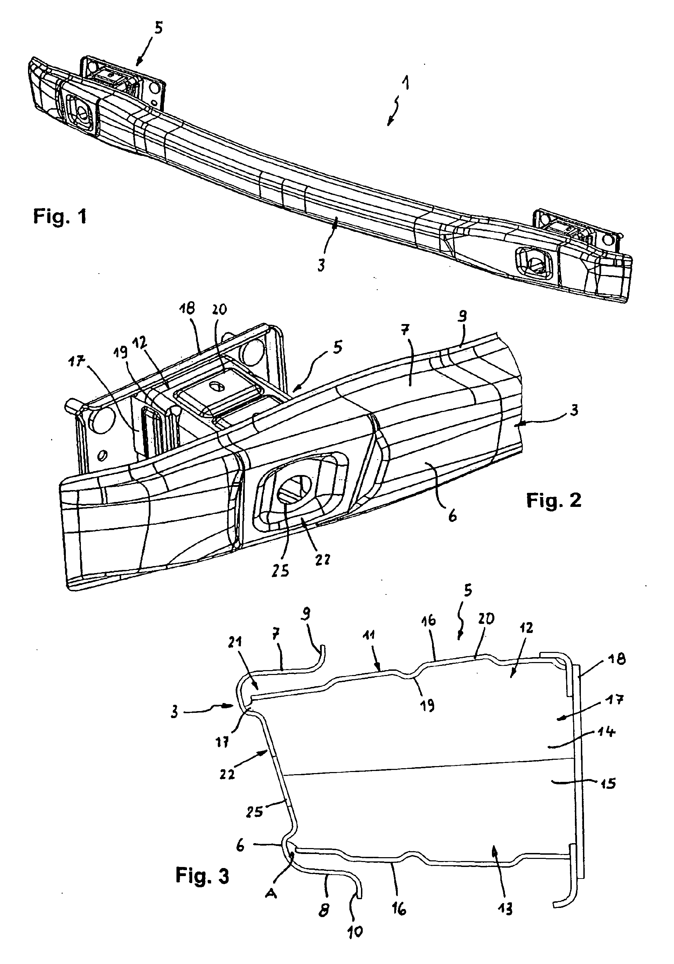

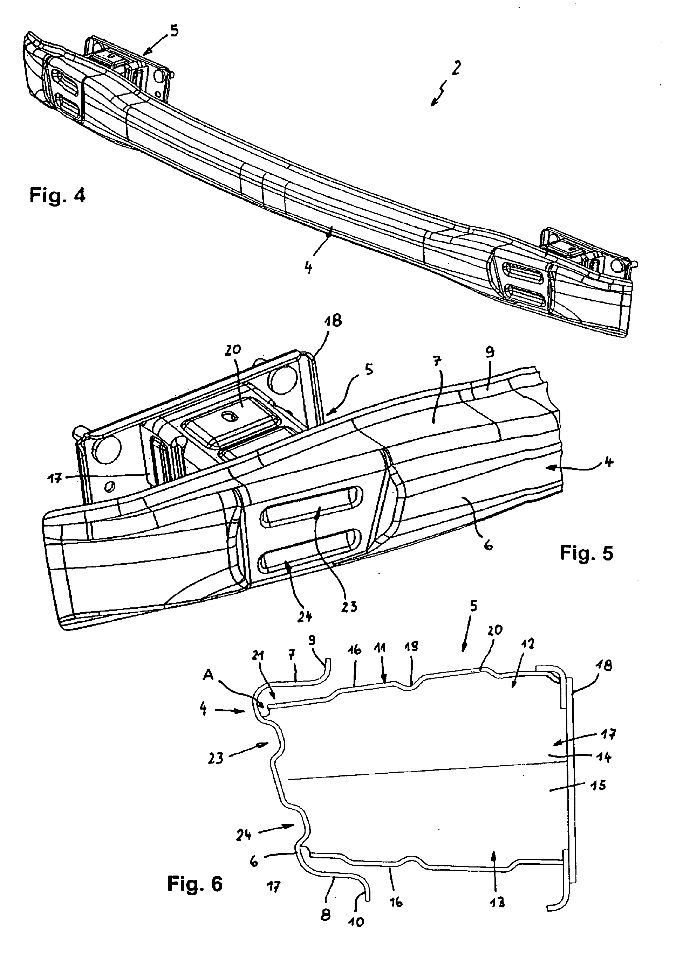

Die Figur 1 ebenso wie die Figur 4 zeigen in perspektivischer Darstellungsweise jeweils einen Stoßfänger 1, 2 für ein Kraftfahrzeug.

Ein solcher Stoßfänger 1, 2 umfasst einen quer zu den hier nicht dargestellten Längsträgern des Kraftfahrzeugrahmens festlegbaren Querträger 3, 4. Zwischen den Längsträgern und den Querträgern 3, 4 sind Crashboxen 5 als Energie absorbierende Deformationselemente eingegliedert (siehe hierzu auch Figuren 2 und 3 sowie 5 bis 10).

Jeder Querträger 3, 4 weist zumindest über den wesentlichen Teil seiner Länge ein zu den Crashboxen 5 hin offenes Profil mit einem U-förmigen Querschnitt auf. Die Querträger 3, 4 besitzen einen frontseitigen Steg 6, an den sich ein oberer Schenkel 7 und ein unterer Schenkel 8 anschließt. Man erkennt insbesondere auch anhand der Figuren 3 und 6, dass sich an die Schenkel 7, 8 nach außen gerichtete Flansche 9, 10 anschließen.

Jede Crashbox 5 besitzt ein als länglicher Hohlkörper gestaltetes Deformationsprofil 11. Das Deformationsprofil 11 ist eine dünnwandige Metallkonstruktion, die aus zwei U-förmig konfigurierten Schalenkörpern 12, 13 zusammengesetzt ist. Die Schalenkörper 12, 13 überlappen sich endseitig ihrer Seitenschenkel 14, 15 und sind entlang dieser gefügt. Zusammengefügt weist das Deformationsprofil 11 so einen oberen und unteren Horizontalschenkel 16 und zwei seitliche Vertikalschenkel 17 auf. Durch längsträgerseitige Flanschplatten 18 wird ein Deformationsprofil 11 zur Crashbox 5 komplettiert. Man erkennt ferner, dass sowohl in den Horizontalschenkel 16 als auch in den Vertikalschenkel 17 des Deformationsprofils 11 eine Anzahl sich quer zur Längsachse der Deformationsprofile 11 erstreckender Sicken 19 bzw. Verprägungen 20 vorgesehen sind.

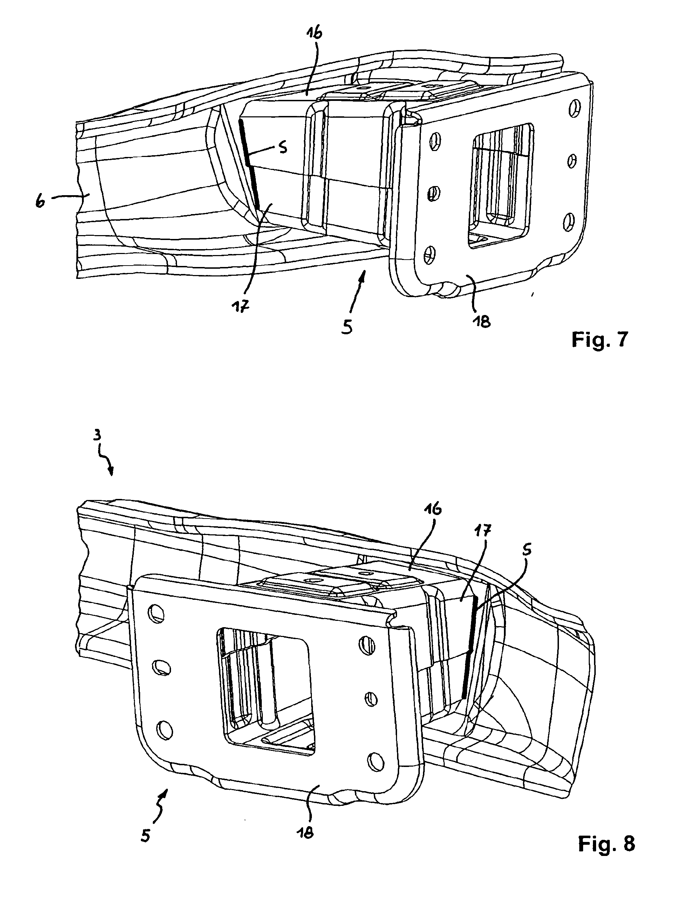

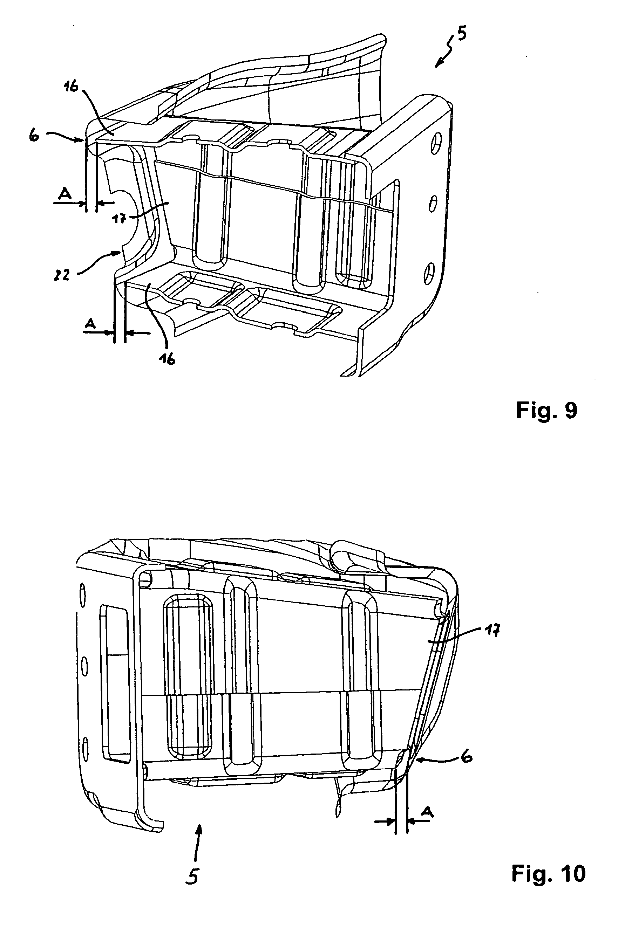

Jede Crashbox 5 taucht mit ihrem querträgerseitigen Ende 21 in den U-förmigen Querträger 3, 4 ein und ist dort innenseitig des Querträgers 3, 4 mit ihren Vertikalschenkeln 17 an den Steg 6 des Querträgers 3, 4 durch eine Schweißnaht gefügt, wohingegen die Horizontalschenkel 16 der Crashboxen 5 nicht mit dem Querträger 3, 4 gefügt sind und zum Steg 6 einen Abstand A aufweisen. Die Fügung einer Crashbox 5 an den Steg 6 eines Querträgers 3, 4 entlang der Vertikalschenkel 17 durch Schweißnähte S ist in den Figuren 7 und 8 verdeutlicht. Die Figuren 9 und 10 ebenso wie die Figuren 3 und 6 lassen den Abstand A der Horizontalschenkel 16 zum Steg 6 eines Querträgers 3, 4 erkennen. Der Abstand A beträgt zwischen 1 mm und 8 mm, vorzugsweise 4 mm bis 6 mm.

In den Stegen 6 der Querträger 3, 4 sind im Bereich der Enden 21 der Crashboxen 5 in Richtung zu den Crashboxen 5 ausgestellte Vertiefungen 22 bzw. 23 und 24 vorgesehen, welche in die offenen Enden 21 der Crashboxen hineinragen. Die Vertiefungen 22, 23, 24 sind so ausgestaltet, dass hierdurch eine Beeinflussung bzw. Fesselung des Bewegungsverhaltens der Horizontalschenkel 16 der Crashbox 5 im Falle einer Deformation erfolgt in dem Sinne, dass ein unkontrolliertes Wegrutschen bzw. Kollabieren der Horizontalschenkel 16 vermieden wird. Der Abstand A trägt hierzu bei, weil hierdurch eine Beeinträchtigung der Initialfaltung vermieden wird. Erst mit fortschreitender Deformation legt sich die Vertiefung 22, 23, 24 bzw. der Steg 6 vollständig an die Crashbox 5 an und die eingeleitete Faltbewegung der Crashbox 5 wird kontrolliert fortgesetzt. Auf diese Weise ist ein bauteiloptimierter Energieabbau durch die Verformung der Crashbox 5 gewährleistet.

Bei der Ausführungsform des Querträgers 3 gemäß den Figuren 1 bis 3 ist die Vertiefung 22 nach Art einer schalenartigen Verprägung ausgeführt. Innerhalb der Vertiefung 22 ist im Steg 6 eine Öffnung 25 vorgesehen, durch die beispielsweise eine Abschleppöse hindurchgesteckt werden kann.

Bei der Ausführungsform des Querträgers 4 gemäß den Figuren 4 bis 6 sind die Vertiefungen 23, 24 rinnenartig gestaltet nach Art einer Sicke. Die beiden Vertiefungen 23, 24 sind mit vertikalem Abstand übereinander angeordnet und erstrecken sich parallel zu den Schenkeln 7, 8 des Querträgers 4. Hierbei sind die Vertiefungen 23, 24 jeweils nahe am oberen bzw. unteren Horizontalschenkel 16 der Crashbox 5 angeordnet.

## Patentansprüche

1. Stoßfänger für ein Kraftfahrzeug mit einem im Querschnitt U-förmigen Querträger (3, 4), welcher einen Steg (6) und zwei Schenkel (7, 8) aufweist und der Querträger (3, 4) unter Eingliederung von gehäuseartigen Crashboxen (5) quer zu den Längsträgern des Kraftfahrzeugrahmens angeordnet ist, wobei die Crashboxen (5) mit ihren querträgerseitigen Enden (21) am Steg (6) des Querträgers (3, 4) anliegen, wobei jede Crashbox (5) mit ihrem querträgerseitigen Ende (21) in den U-förmigen Querträger (3, 4) eintaucht und dort innenseitig des Querträgers (3, 4) mit seinen Vertikalschenkeln (17) an den Steg (6) des Querträgers (3, 4) durch eine Schweißnaht gefügt ist, wohingegen die Horizontalschenkel (16) der Crashboxen (5) zum Steg (6) einen Abstand (A) aufweisen,
**dadurch gekennzeichnet, dass**
der Steg (6) des Querträgers (3, 4) im Bereich der Enden (21) der Crashboxen (5) jeweils zumindest eine in Richtung zu den Crashboxen (5) ausgestellte Vertiefung (22, 23, 24) aufweist, und die Horizontalschenkel (16) der Crashboxen (5) nicht mit dem Querträger (3, 4) gefügt sind.

2. Stoßfänger nach Anspruch 1, **dadurch gekennzeichnet, dass** der Abstand (A) zwischen 1 mm bis 8mm, vorzugsweise 4mm bis 6mm, bemessen ist.

3. Stoßfänger nach Anspruch 1 oder 2, **dadurch gekennzeichnet, dass** die Vertiefung (22) schalenartig gestaltet ist.

4. Stoßfänger nach Anspruch 1 oder 2, **dadurch gekennzeichnet, dass** die Vertiefung (23, 24) rinnenartig gestaltet ist.

5. Stoßfänger nach wenigstens einem der Ansprüche 1 bis 4, **dadurch gekennzeichnet, dass** der Steg (6) des Querträgers (3) im Bereich des Endes (21) einer Crashbox (5) eine Öffnung (25) aufweist.

6. Stoßfänger nach wenigstens einem der Ansprüche 1 bis 5, **dadurch gekennzeichnet, dass** zwei mit vertikalem Abstand übereinander angeordnete Vertiefungen (23, 24) vorgesehen sind, welche sich parallel zu den Schenkeln (7, 8) des Querträgers (4) erstrecken.

7. Stoßfänger nach wenigstens einem der Ansprüche 1 bis 6,**dadurch gekennzeichnet, dass** die Crashboxen (5) sich quer zu ihrer Längsachse erstreckende Sicken (19) und Verprägungen (20) aufweisen.

8. Stoßfänger nach wenigstens einem der Ansprüche 1 bis 7, **dadurch gekennzeichnet, dass** die Crashboxen (5) zweischalig ausgebildet sind.

## Claims

1. A bumper for amotor vehicle within cross-sectionU-shapedcross beam(3, 4) having abar (6) and two side pieces (7, 8) and the cross beam(3,4) withintegration of housing-likecrash boxes(5) transverselydisposedto the longitudinal supportsof the motorvehicle frame, wherein the crash boxes (5) with their cross-beamends (21) bear on the bar (6)of the cross beam(3, 4), wherein each crash box (5) with its cross-beamend (21) dips into the U-shapedcross beam (3, 4) and then is joined bya welding seam on the insideof the cross beam(3, 4) with its verticalside piece (17) to the bar (6)of the cross beam (3, 4),whereas thehorizontal side piece (16) of the crash boxes5 to the bar (6) maintain a distance (A),is **characterized in that** the bar (6) of the cross beam (3, 4) in the area of the ends (21) of the crash boxes (5) have a recess each (22, 23, 24) in the direction to thecrash boxes(5),and the horizontalside piece (16)of the crash boxes(5) arenotjoined with thecross beam (3, 4).

2. A bumper according to claim1, is characterizedin that the distance(A) is kept between1 mm to8 mm, preferably4mm to6mm.

3. A bumper according to claim1 or 2,is characterized inthat the recess(22) isa bowl like design.

4. A bumper according to claim1 or 2, is characterized in thatthe recess (23,24) is designed like groove.

5. A bumper according toany one of claims1 to 4, ischaracterized inthat the bar (6) of the cross beam (3) in the area of the end (21) of a crash box (5) has an opening (25)

6. A bumper according toany one of claims1 to 5, is characterized in thattwovertically spaced,superposedrecesses (23, 24) are provided which extendparallel to the side pieces(7, 8) of the cross beam (4).

7. A bumper according toany one of claims1 to 6, ischaracterized inthat transversely to the longitudinal axis of the crashboxes (5)show corrugations (19) and embossments(20).

8. A bumper according toany one of claims1 to 7,characterized in thatthe crash boxes(5)are formed as a double bowl design.

## Revendications

1. Pare-chocs pour un véhicule automobile avec une traverse (3, 4), dont la section transversale est en forme de U, qui présente un dos (6) et deux branches (7, 8) et la traverse (3, 4) est disposée en incorporant des boîtes-tampons (5) de type boîtier transversalement aux longerons du châssis de véhicule automobile, les extrémités (21) côté traverse des boîtes-tampons (5) reposant sur le dos (6) de la traverse (3, 4), l'extrémité (21) côté traverse de chaque boîte-tampon (5) s'enfonçant dans la traverse en forme de U (3, 4) et ses branches verticales (17) y étant assemblées côté intérieur de la traverse (3, 4) sur le dos (6) de la traverse (3, 4) par un cordon de soudure, alors que les branches horizontales (16) des boîtes-tampons (5) présentent une distance (A) par rapport au dos (6), **caractérisé en ce que** le dos (6) de la traverse (3, 4) présente, dans la zone des extrémités (21) des boîtes-tampons (5), respectivement au moins une cavité (22, 23, 24) orientée en direction des boîtes-tampons (5), et **en ce que**
les branches horizontales (16) des boîtes-tampons (5) ne sont pas assemblées avec la traverse (3, 4).

2. Pare-chocs selon la revendication 1, **caractérisé en ce que** la distance (A) est comprise entre 1 et 8 mm, de préférence entre 4 et 6 mm.

3. Pare-chocs selon la revendication 1 ou 2, **caractérisé en ce que** la cavité (22) est conçue comme une coque.

4. Pare-chocs selon la revendication 1 ou 2, **caractérisé en ce que** la cavité (23, 24) est conçue comme une rigole.

5. Pare-chocs selon au moins l'une quelconque des revendications 1 à 4, **caractérisé en ce que** le dos (6) de la traverse (3) présente une ouverture (25) dans la zone de l'extrémité (21) d'une boîte-tampon (5).

6. Pare-chocs selon au moins l'une quelconque des revendications 1 à 5, **caractérisé en ce que** deux cavités (23, 24) disposées à distance verticale l'une au-dessus de l'autre sont prévues, lesquelles s'étendent parallèlement aux branches (7, 8) de la traverse (4).

7. Pare-chocs selon au moins l'une quelconque des revendications 1 à 6, **caractérisé en ce que** les boîtes-tampons (5) présentent des moulures (19) et des gaufrages (20) s'étendant transversalement à leur sens longitudinal.

8. Pare-chocs selon au moins l'une quelconque des revendications 1 à 7, **caractérisé en ce que** les boîtes-tampons (5) sont réalisées avec deux coques.
